# EUROPEAN PATENT SPECIFICATION

(11) **EP 4 176 996 B1**
(45) Date of publication and mention of the grant of the patent: **15.04.2026**
(21) Application number: 21206226.9
(22) Date of filing: 03.11.2021
(51) Int. Cl.: B23K 1/00, B23K 31/02

(54) **METHOD OF MAKING A TOOL, AND CORRESPONDING TOOL**
VERFAHREN ZUR HERSTELLUNG EINES WERKZEUGS, UND ENTSPRECHENDES WERKZEUG
PROCÉDÉ DE FABRICATION D'OUTIL, ET OUTIL CORRESPONDANT

(43) Date of publication of application: 10.05.2023
(73) Proprietor: AB Sandvik Coromant, 811 81 Sandviken (SE)
(72) Inventor: DAHL, Leif, 811 81 Sandviken (SE); ULITZKA, Tim, 811 81 Sandviken (SE)
(74) Representative: Sandvik

(56) References cited:
- CN-A- 109 514 017
- JP-A- 2000 042 756
- JP-A- H05 177 344
- AMELZADEH MOHAMMADREZA ET AL: "Dissimilar vacuum brazing of cemented carbide to steel using double-layer filler metals", JOURNAL OF MANUFACTURING PROCESSES, SOCIETY OF MANUFACTURING ENGINEERS, DEARBORN, MI, US, vol. 47, 28 September 2019 (2019-09-28), pages 1 - 9, XP085886140, ISSN: 1526-6125, [retrieved on 20190928], DOI: 10.1016/J.JMAPRO.2019.09.015

## Description

The present invention relates to a method of making a tool comprising a joining a maraging steel joining partner and a cemented carbide joining partner by brazing. The present invention also relates to a tool made according to this method.

### Background

Joining steel with cemented carbide by brazing or welding has been known for a long time in the art of making tools. There are several challenges when joining steel with cemented carbide, e.g. differences in CTE (coefficient of thermal expansion), strength of the braze joint, undesired hardness profiles in the steel etc.

There are several solutions that can improve each of these problems individually, but the solutions often result in problems in other areas and not all problems can be solved.

The principle of brazing is that you use a filler material that joins two pieces when heated. There are several ways to heat the braze joint, where one of the most common way is induction heating using an induction coil. One of the benefits with using a coil is that only the local area around the braze joint is heated and leaving the rest of the tool unaffected. This local heating can however lead to unwanted hardness profiles in the steel part which can cause problems when the steel part will be provided with threading etc. for fastening rotary tools and other cutting tools etc.

JP H05 177344 A, describing the preamble of claims 1 and 9, relates to the assembling of a structure comprising a pair of metal components through the provision of a brazing/soldering filler material comprising Au and Ag.

One object of the present invention is to provide a tool which have both a strong braze joint and a steel part with an even hardness profile and a high hardness and consequently an improved wear resistance.

Another object of the present invention is to provide a process of joining steel and cemented carbide which is easy to use and lead to a predictable joint with high strength and a steel part that has a predictable hardness.

### Detailed description of the invention

The present invention relates to a method of making a tool by joining a cemented carbide joining partner with a maraging steel joining partner as defined in claim 1, and comprising the steps of:
- applying a Ni coating with a thickness of between 0.5 and 15 µm on a joining surface of the maraging steel joining partner;
- placing a filler material comprising at least 70 wt% Cu in contact with the cemented carbide joining partner and the joining surface of the maraging steel joining partner;
- subjecting the cemented carbide joining partner and the maraging joining partner with the filler material in between to an elevated temperature in a vacuum furnace at a temperature between 900 and 1200°C, for a time period of between 1 and 60 minutes;
- subjecting the joined cemented carbide joining partner and maraging joining partner to a tempering process at a temperature of between 300 and 600°C for between 5 minutes and 12 hours.

Maraging steel is a type of steel which is hardened by precipitation of intermetallic compounds. Maraging steels suitably contains from 8 to 25 wt% Ni and one or more alloying elements selected from Co, Mo, Ti, Al and Cr in a total amount of between 7 to 27 wt%, preferably between 7 to 23 wt% of alloying elements. Maraging steels typically contain less carbon than conventional steel, suitably 0.03 wt% or less. The balance being Fe and impurities.

In one embodiment of the present invention the maraging steel according to the present invention contains from 11 to 25 wt% Ni, preferably 15 to 25 wt% Ni. The alloying elements are suitably Co in an amount of from 7 to 15 wt%, preferably 8.5 to 12.5 wt% Co, Mo in an amount of from 3 to 10 wt%, preferably 3 to 6 wt% Mo, Ti in an amount of from 0.1 to 1.6 wt% preferably from 0.5 to 1.2 wt% Ti, from 0 to 0.15 wt% Cr, Al in an amount of from 0 to 0.2 wt% and less than 0.03 wt% C. The balance being Fe and impurities.

In one embodiment of the present invention, the maraging steel have a composition of from 17 to 19 wt% Ni, from 8.5 to 12.5 wt% Co, from 4 to 6 wt% Mo, from 0.5 to 1.2 wt% Ti, from 0 to 0.15 wt% Cr, from 0 to 0.2 wt% Al and less than 0.03 wt% C. The balance being Fe and impurities.

In another embodiment of the present invention, the maraging steel have a composition of from 8 to 11 wt% Ni, preferably from 9 to 10 wt% Ni, from 2.5 to 4 wt% Cr, preferably from 3 to 3.5 wt% Cr, from 3.5 to 5 wt% Mo preferably from 4 to 4.5 wt% Mo, from 0.4 to 1.1 wt% Ti, preferably from 0.7 to 0.9 wt% Ti, Si less than 0.4 wt%, Mn less than 0.4 wt% and balance Fe and impurities.

By impurities is herein meant any element that can be present in the maraging steel in such small amounts that it does not have any influence on the properties of the steel. The total amount of impurities is below 0.50 wt%, preferably below 0.15 wt%. Examples of such elements are Mn, P, Si, B and S.

In one embodiment if the present invention, the amount of Mn is less than 0.05 wt%, the amount of P is less than 0.003 wt%, the amount of Si is less than 0.004 wt% and the amount of S less than 0.002 wt%.

The Ni coating can be deposited using any coating technique known in the art of depositing Ni coatings, e.g. galvanization or PVD. The thickness of the Ni coating is between 0.5 and 20 µm, preferably between 2 and 10 µm.

In one embodiment of the present invention the Ni coating is deposited using PVD comprising the steps of first cleaning the steel surface by ion etching prior to depositing the Ni coating. The exact process parameters are to be determined by the person skilled in the art depending on what type of depositing equipment that is to be used.

The cemented carbide joining partner can be made of any cemented carbide common in the art. The cemented carbide comprises a hard phase embedded in a metallic binder phase matrix.

By cemented carbide is herein meant that at least 50 wt%, suitably at least 70 wt%, of the hard phase is WC.

Suitably, the amount of metallic binder phase is between 3 and 20 wt%, preferably between 4 and 15 wt% of the cemented carbide. Preferably, the main component of the metallic binder phase is selected from one or more of Co, Ni and Fe, more preferably the main component of the metallic binder phase is Co.

By main component is herein meant that no other elements are added to form the binder phase, however, if other components are added, like e.g. Cr, they will inevitably be dissolved in the binder during sintering.

In one embodiment of the present invention, the cemented carbide can also comprise other components common in cemented carbides elements selected from Cr, Ta, Ti, Nb and V present as elements or as carbides, nitrides or carbonitrides.

The filler material (sometimes also called braze material) according to the present invention contains at least 70 wt% Cu, preferably at least 80 wt% Cu. The remaining elements could be e.g. Ge, Mn, Ni, Sn, Ag, to adjust melting temperature and wetting to the materials to be joined.

In one embodiment of the present invention the filler material is at least 99 wt% Cu.

Suitably, the filler material is provided as a foil or wire.

The filler material is provided onto the joining surfaces of the cemented carbide substrate and the steel part.

The thickness of the filler material prior to the brazing process depends on the type of material, i.e. foil or wire. Typically, the thickness of a foil is between 5 and 200 µm, preferably between 15 and 100 µm.

The cemented carbide joining partner and the maraging joining partner with the filler material in between is then subjected to an elevated temperature by placing the parts in a furnace with an inert or reducing environment, i.e. with minimum amount of oxygen. Preferably, the brazing temperature in the furnace is between 900 and 1200°C, preferably between 950 and 1170°C more preferably between 1000 and 1150°C. The time the parts are subjected to the elevated temperature is between 1 and 60 minutes, preferably between 5 and 30 minutes. If the time at elevated temperature is shorter, there is not enough time for the braze joint to form and the desired strength of the braze joint is not reached. If the time at elevated temperature is longer it can have a negative effect on the steel properties.

Suitably the cooling rate from the brazing temperature down to a temperature at least below the solidus temperature of the filler material, preferably below 300°C, is between 1 to 50 °C/min, preferably is between 3 to 10 °C/min.

The brazing suitably takes place in vacuum or with the presence of Argon at low partial pressure. By vacuum is herein meant that the pressure in the furnace is below 5x10⁻⁴ mbar, preferably below 5x10⁻⁵ mbar. If argon is present, the argon pressure is below 1x10⁻² mbar.

After brazing, the parts are subjected to an ageing step by subjecting the parts to an elevated ageing temperature of between 300 and 600°C, preferably between 400 and 600°C and most preferably between 500 and 600°C, for a time of between 5 minutes and 12 hours, preferably between 2 and 5 hours.

Suitably the heating rate up to the ageing temperature is between 1 to 50 °C/min, preferably is between 5 to 10 °C/min. Suitably the cooling rate from the ageing temperature down to a temperature of preferably below 300°C, is between 1 to 50 °C/min, preferably is between 5 to 10 °C/min.

The brazing furnace used according to the present invention can be any furnace that can provide such well controlled conditions with regard to a vacuum, heating and cooling rate etc. as has been described above. The brazing and ageing steps can either be done in the same furnace or in two separate furnaces.

In one embodiment of the present invention, the ageing takes place directly after the brazing step in the same furnace as the brazing step takes place.

In one embodiment of the present invention, the ageing takes place directly after the brazing step in a different furnace from the vacuum brazing.

In one embodiment of the present invention, the ageing takes place in the same furnace/deposition chamber before or during deposition of a coating.

The tool can be any tool or part of a tool common in the art where a cemented carbide part is joined with a steel part by brazing. Examples are drills, end mills, tool holders like shanks etc.

In one embodiment of the present invention, the tool is a shank used as a tool holder for a cutting tool like an insert, drill head etc. The shank is formed by a cemented carbide part and a steel part, where the cemented carbide part is used to create stability and the steel part is necessary to create threading to fasten a cutting tool.

The present invention also relates to a tool made according to the method above, as defined in claim 9. The tool comprises a maraging steel joining partner and a cemented carbide joining partner and a braze joint joining said joining partners.

By braze joint is herein meant the area or mass between the cemented carbide joining partner and the maraging steel joining partner that is filled by the filler material and formed during the brazing process.

The thickness of the braze joint is suitably between 5 and 200 µm, preferably between 15 and 100 µm.

The braze joint has a shear strength of at least 200 MPa, preferably at least 250 MPa.

The brazing joint comprises Cu and most likely some Ni. The Ni coating is extremely difficult to detect after the brazing step. Since the maraging steel joining member also contains considerable amounts of Ni it cannot be determined where any detected Ni comes from. The effect of the Ni coating is however obvious when the shear strength of the braze joint is measured.

The average hardness of the maraging steel part is suitably between 350 and 600 HV1, preferably between 400 and 460 HV1 and more preferably 410 to 450 HV1. The hardness is measured by a Vickers hardness tester, applying a load of 1 kgf (kilogram force) and a loading time of 15s. A pattern of 3 x 6 indents in the full material (not surface) of the maraging steel parts was applied. The average value is an average of these measurement points.

### Figures

Figure 1 shows a schematic drawing of the shearing test device where 1 is the steel joining member and 2 is the cemented carbide joining member.
Figure 2 shows a SEM image of a braze joint according to the present invention where a Ni coating was deposited onto the steel joining partner prior to brazing where A is the cemented carbide joining member B is the brazing joint and C is the maraging steel joining member.
Figure 3 shows a SEM image of a braze joint according to prior art where no Ni coating was deposited onto the steel joining partner prior to brazing where A is the cemented carbide joining member B is the brazing joint and C is the maraging steel joining member.

### Example 1

Steel parts made of maraging steel 1.2709 in the form of a cylinder were provided together with cemented carbide parts with a composition of 10 wt% Co, 1 wt% other carbides and the remaining WC. The maraging steel had a hardness of approx. 340 HV1 prior to brazing.

Onto a part of the maraging steel parts a Ni coating was deposited using arc PVD (physical vapor deposition). The samples were first ion etched (100A, 1,000 V bias voltage, 3 Ah) and then the Ni coating was deposited using 90A, 30V bias voltage and 90 Ah until a thickness of 5 µm was reached.

The filler material was provided in the form of a foil with a thickness of 100 µm. The composition of the filler material was 100% Cu.

The foil was placed between the maraging steel part and the cemented carbide part so that both pieces were in contact with the foil. The assembled joining pieces were then placed into a Schmetz vacuum furnace where the temperature was first increased to 650°C at a rate of 20°C/min and kept there for 10 minutes. The pieces were then heated up to 850°C at a rate of 20°C/min and kept there for 10 minutes. After that, the temperature was increased up to the brazing temperature of 1100°C at a rate of 5°C/min. The brazing temperature 1100°C was kept for 15 minutes after which the pieces were cooled down to 300°C at a rate of 5°C/min. After 300°C it was free cooling.

After the brazing step, the brazed pieces were subjected to an ageing process to increase the hardness of the maraging steel. The pieces were placed in the same furnace as the brazing where the temperature was increased to the ageing temperature at a rate of 5°C/min. The ageing temperature 580 °C was kept for 3h after which the pieces were cooled down to 300°C at a rate of 5°C/min. After 300°C it was free cooling.

The joined pieces where the maraging steel has been provided with a Ni coating is herein called Invention 1 whereas the joined pieces where the maraging steel was not provided with a Ni coating is herein called Comparative 1.

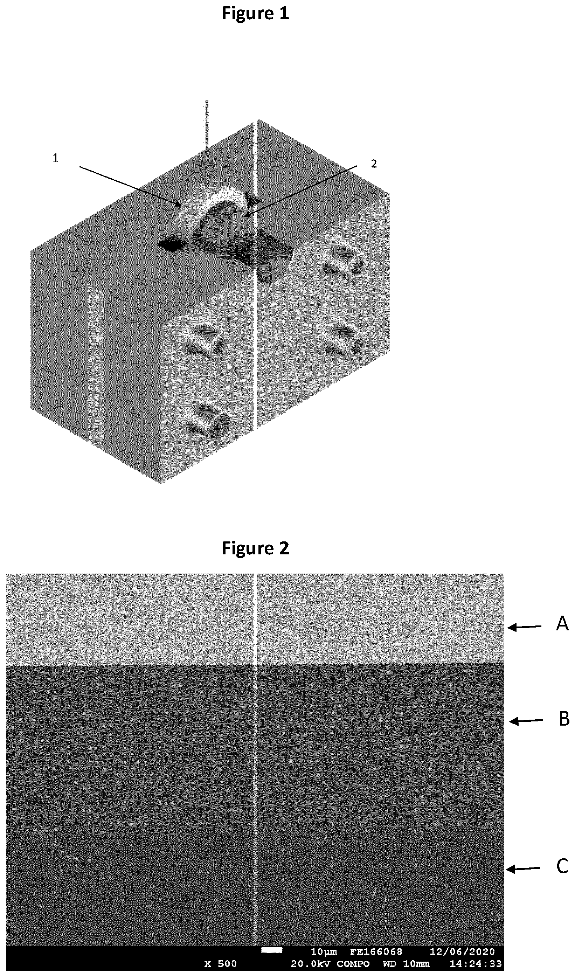

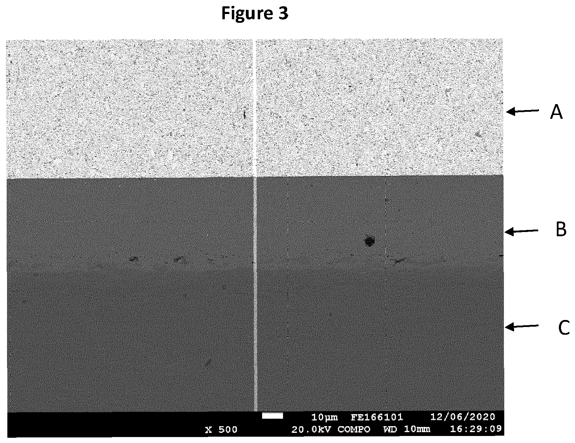

A SEM image of the braze joint of Invention 1 is shown in figure 2 and a SEM image of the braze joint of Comparative 1 is shown in figure 3. As can be seen in Figure 3, the braze joint contains some irregularities and defects closest to the steel part.

An excellent wetting with no signs of thermal stress crack could be observed, proven by the high shear test result.

### Example 2 (Comparative)

A steel part made of the carbon-hardening hot-work steel 1.2344 was provided together with a cemented carbide part with a composition of 10 wt% Co, 1 wt% other carbides and the remaining WC.

The filler material was provided in the form of a foil with a thickness of 100 µm. The braze metal had a composition of 100.0 wt% Cu. The melting temperature is 1085°C.

The foil was placed between the maraging steel part and the cemented carbide part and assembled joining pieces were placed into the furnace where the temperature was first increased to 650 °C at a rate of 20°C/min and hold for 5 minutes. From 650 °C the temperature was then increase by a rate of 10 K/min to the brazing temperature T_{Brazing}, which was 1100 °C. T_{Brazing} was kept for a dwell time of 15 min, after which the pieces were cooled down to 850 °C with a cooling rate of 50 K/min. From 850 °C, the specimens were N₂-quenched with an overpressure of 2 bars and a fan frequency of 2500 min⁻¹.

Subsequently, the cemented carbide-steel joint with the carbon-hardening hot-work steel 1.2344 was aged at 630 °C for 2 h two times.

The sample will herein be denoted Comparative 2.

### Example 3

The joined pieces were evaluated by measuring the shear strength of the brazed joint, the hardness of the maraging steel part and the braze joint were investigated for cracks etc. In order to assess the joint strength properties, the samples were shear tested using a shear device set-up as shown in figure 1 where 1 is the steel part in the shape of a steel cylinder (Ø=20 mm, h=5 mm) and 2 is the cemented carbide part in the shape of a cemented carbide cylinder (Ø=10 mm, h=5 mm. The steel cylinder is positioned in the gap of the shear strength test device and therefore can only be moved in loading direction. A notch, which was eroded into the surface of the device, holds the joined parts in the right position and guarantees an evenly distributed force induction into the braze joint. The applied force was constantly increased until the braze joint failed and the cemented carbide cylinder sheared off. The ultimate shear strength was then calculated by the quotient of the maximal measured force and the initial joining surface (A=78,5 mm²). The filler material was not removed before the determination of brazed joint shear strength. When a rod was tested, the same method was applied.

The hardness of the steel parts was measured by a Vickers hardness tester on a cross section of the maraging steel part, applying a load of 1 kgf (kilogram force) and a loading time of 15 s. A pattern of 3 x 6 indents covering the complete profile (ca. 20 x 5 mm²) of the of the steel part in the cross-section was applied.

**Table 1**

| | Shear strength (MPa) | Hardness (HV1) |
|---|---|---|
| Invention 1 | 327 | 427 |
| Comparative 1 | 152 | 427 |
| Comparative 2 | 17.1 | 494 |

## Claims

1. A method of making a tool by joining a cemented carbide joining partner with a maraging steel joining partner comprising the steps of:
- applying a Ni coating on a joining surface of the maraging steel joining partner;
- placing a filler material in contact with the cemented carbide joining partner and the joining surface of the maraging steel joining partner; the method being **characterised by**:
- the Ni coating having a thickness between 0.5 and 15 µm;
- the filler material comprising at least 70 wt% Cu;
and by the following steps:
- subjecting the cemented carbide joining partner and the maraging joining partner with the filler material in between to a brazing process at an elevated temperature in a vacuum furnace at a temperature between 900 and 1200°C, for a time period of between 5 and 60 minutes;
- subjecting the joined cemented carbide joining partner and maraging joining partner to a tempering process at a temperature of between 300 and 600°C for between 5 minutes and 12 hours.

2. A method according to claim 1 wherein the filler material comprises at least 99 wt% Cu.

3. A method according to any of the preceding claims wherein the Ni coating has a thickness of between 2 and 10 µm and is deposited using PVD technique.

4. A method according to any of the preceding claims wherein the maraging steel comprises 8 to 25 wt% Ni, one or more alloying elements selected from Co, Mo, Ti, Al and Cr in a total amount of between 7 to 27 wt%, less than 0.03 wt% C and balance Fe and impurities.

5. A method according to any of the preceding claims wherein the maraging steel comprises 11 to 25 wt% Ni, 7 to 15 wt% Co, from 3 to 10 wt% Mo, 0.1 to 1.6 wt% Ti, from 0 to 0.15 wt% Cr, from 0 to 0.2 wt% Al, less than 0.03 wt% C with balance Fe and impurities.

6. A method according to any of the preceding claims wherein the maraging steel comprises 15 to 25 wt% Ni, 8.5 to 12.5 wt% Co, from 3 to 6 wt% Mo, 0.5 to 1.2 wt% Ti, from 0 to 0.15 wt% Cr, from 0 to 0.2 wt% Al, less than 0.03 wt% C with balance Fe and impurities.

7. A method according to any of the preceding claims wherein the brazing process takes place at a temperature of between 950 and 1170°C for between 5 and 30 minutes.

8. A method according to any of the preceding claims wherein the tempering process takes place at a temperature of between 400 and 600°C for between 2 and 5 hours.

9. A tool made by a method according to any of claims 1-8 comprising a maraging steel joining partner and a cemented carbide joining partner and a braze joint joining said joining partners the tool being **characterised by**;
- a Ni coating having a thickness of between 0.5 and 15 µm on the joining surface of the maraging steel;
- the braze joint being filled with the filler material comprising at least 70 wt% Cu.

10. A tool according to claim 9 wherein the braze joint has a shear strength of at least 200 MPa.

11. A tool according to any of claims 9-10 wherein the maraging steel joining partner has a composition of 8 to 25 wt% Ni, one or more alloying elements selected from Co, Mo, Ti, Al and Cr in a total amount of between 7 to 27 wt%, less than 0.03 wt% C and balance Fe and impurities.

## Patentansprüche

1. Verfahren zur Herstellung eines Werkzeugs durch Verbinden eines Verbindungspartners aus Hartmetall mit einem Verbindungspartner aus martensitaushärtendem Stahl, umfassend die folgenden Schritte:
- Aufbringen einer Ni-Beschichtung auf eine Verbindungsfläche des Verbindungspartners aus martensitaushärtendem Stahl;
- Anbringen eines Füllmaterials in Kontakt mit dem Verbindungspartner aus Hartmetall und der Verbindungsfläche des Verbindungspartners aus martensitaushärtendem Stahl;
wobei das Verfahren **dadurch gekennzeichnet ist, dass**
- die Ni-Beschichtung eine Dicke zwischen 0,5 und 15 µm aufweist;
- das Füllmaterial mindestens 70 Gew.-% Cu umfasst;
und durch die folgenden Schritte:
- dem Unterziehen des Hartmetall-Verbindungspartners und des Verbindungspartners aus martensitaushärtendem Stahl mit dem Füllmaterial dazwischen einem Hartlötprozess bei erhöhter Temperatur in einem Vakuumofen bei einer Temperatur zwischen 900 und 1200 °C für einen Zeitraum zwischen 5 und 60 Minuten;
- dem Unterziehen der verbundenen Verbindungspartner aus Hartmetall und martensitaushärtendem Stahl einem Temperprozess bei einer Temperatur zwischen 300 und 600 °C für einen Zeitraum zwischen 5 Minuten und 12 Stunden.

2. Verfahren nach Anspruch 1, wobei das Füllmaterial mindestens 99 Gew.-% Cu umfasst.

3. Verfahren nach einem der vorstehenden Ansprüche, wobei die Ni-Beschichtung eine Dicke zwischen 2 und 10 µm aufweist und mittels PVD-Technik aufgebracht wird.

4. Verfahren nach einem der vorstehenden Ansprüche, wobei der martensitaushärtende Stahl 8 bis 25 Gew.-% Ni, ein oder mehrere Legierungselemente, ausgewählt aus Co, Mo, Ti, Al und Cr, in einer Gesamtmenge zwischen 7 und 27 Gew.-%, weniger als 0,03 Gew.-% C und als Rest Fe und Verunreinigungen umfasst.

5. Verfahren nach einem der vorstehenden Ansprüche, wobei der martensitaushärtende Stahl 11 bis 25 Gew.-% Ni, 7 bis 15 Gew.-% Co, 3 bis 10 Gew.-% Mo, 0,1 bis 1,6 Gew.-% Ti, 0 bis 0,15 Gew.-% Cr, 0 bis 0,2 Gew.-% Al, weniger als 0,03 Gew.-% C und als Rest Fe und Verunreinigungen umfasst.

6. Verfahren nach einem der vorstehenden Ansprüche, wobei der martensitaushärtende Stahl 15 bis 25 Gew.-% Ni, 8,5 bis 12,5 Gew.-% Co, 3 bis 6 Gew.-% Mo, 0,5 bis 1,2 Gew.-% Ti, 0 bis 0,15 Gew.-% Cr, 0 bis 0,2 Gew.-% Al, weniger als 0,03 Gew.-% C und als Rest Fe und Verunreinigungen.

7. Verfahren nach einem der vorstehenden Ansprüche, wobei der Lötprozess bei einer Temperatur zwischen 950 und 1170 °C für 5 bis 30 Minuten stattfindet.

8. Verfahren nach einem der vorstehenden Ansprüche, wobei der Temperprozess bei einer Temperatur zwischen 400 und 600 °C für eine Dauer zwischen 2 und 5 Stunden stattfindet.

9. Werkzeug, hergestellt nach einem Verfahren gemäß einem der Ansprüche 1 bis 8, umfassend einen Verbindungspartner aus martensitaushärtendem Stahl und einen Verbindungspartner aus Hartmetall und eine Lötverbindung, die die Verbindungspartner verbindet, wobei das Werkzeug **gekennzeichnet ist durch**:
- eine Ni-Beschichtung mit einer Dicke zwischen 0,5 und 15 µm auf der Verbindungsfläche des martensitaushärtenden Stahls;
- die Hartlötverbindung ist mit einem Füllmaterial gefüllt, das mindestens 70 Gew.-% Cu umfasst.

10. Werkzeug gemäß Anspruch 9, wobei die Lötverbindung eine Scherfestigkeit von mindestens 200 MPa aufweist.

11. Werkzeug gemäß einem der Ansprüche 9-10, wobei der Verbindungspartner aus martensitaushärtendem Stahl eine Zusammensetzung von 8 bis 25 Gew.-% Ni, einem oder mehreren Legierungselementen, ausgewählt aus Co, Mo, Ti, Al und Cr, in einer Gesamtmenge zwischen 7 und 27 Gew.-%, weniger als 0,03 Gew.-% C und Rest Fe und Verunreinigungen aufweist.

## Revendications

1. Procédé de fabrication d'un outil en joignant une partie de jonction en carbure cémenté avec une partie de jonction en acier maraging, comprenant les étapes suivantes :
- l'application d'un revêtement en Ni sur une surface de jonction de la partie de jonction en acier maraging ; et
- le placement d'un matériau de remplissage en contact avec la partie de jonction en carbure cémenté et la surface de jonction de la partie de jonction en acier maraging ;
le procédé étant **caractérisé en ce que** :
- le revêtement en Ni présente une épaisseur entre 0,5 µm et 15 µm ; et **en ce que** :
- le matériau de remplissage comprend au moins 70 % en poids de Cu ;
et par les étapes suivantes :
- la soumission de la partie de jonction en carbure cémenté et de la partie de jonction en acier maraging avec le matériau de remplissage entre elles à un processus de brasage à une température élevée dans un four sous vide à une température entre 900 °C et 1200 °C, pendant une période temporelle entre 5 minutes et 60 minutes ; et
- la soumission de la partie de jonction en carbure cémenté et de la partie de jonction en acier maraging jointes à un processus de trempe entre 300 °C et 600 °C pendant entre 5 minutes et 12 heures.

2. Procédé selon la revendication 1, dans lequel le matériau de remplissage comprend au moins 99 % en poids de Cu.

3. Procédé selon l'une quelconque des revendications précédentes, dans lequel le revêtement en Ni présente une épaisseur entre 2 µm et 10 µm et est déposé en utilisant une technique de dépôt physique en phase vapeur, c'est-à-dire une technique PVD.

4. Procédé selon l'une quelconque des revendications précédentes, dans lequel l'acier maraging comprend de 8 % à 25 % en poids de Ni, un ou plusieurs éléments d'alliage sélectionnés parmi Co, Mo, Ti, Al et Cr selon une quantité totale entre 7 % et 27 % en poids, moins de 0,03 % en poids de C, le complément étant constitué par du Fe et des impuretés.

5. Procédé selon l'une quelconque des revendications précédentes, dans lequel l'acier maraging comprend de 11 % à 25 % en poids de Ni, de 7 % à 15 % en poids de Co, de 3 % à 10 % en poids de Mo, de 0,1 % à 1,6 % en poids de Ti, de 0 % à 0,15 % en poids de Cr, de 0 % à 0,2 % en poids d'Al, moins de 0,03 % en poids de C, le complément étant constitué par du Fe et des impuretés.

6. Procédé selon l'une quelconque des revendications précédentes, dans lequel l'acier maraging comprend de 15 % à 25 % en poids de Ni, de 8,5 % à 12,5 % en poids de Co, de 3 % à 6 % en poids de Mo, de 0,5 % à 1,2 % en poids de Ti, de 0 % à 0,15 % en poids de Cr, de 0 % à 0,2 % en poids d'Al, moins de 0,03 % en poids de C, le complément étant constitué par du Fe et des impuretés.

7. Procédé selon l'une quelconque des revendications précédentes, dans lequel le processus de brasage est effectué à une température entre 950 °C et 1170 °C pendant entre 5 minutes et 30 minutes.

8. Procédé selon l'une quelconque des revendications précédentes, dans lequel le processus de trempe est effectué à une température entre 400 °C et 600 °C pendant entre 2 heures et 5 heures.

9. Outil fabriqué au moyen d'un procédé selon l'une quelconque des revendications 1 à 8, comprenant une partie de jonction en acier maraging et une partie de jonction en carbure cémenté et un joint de brasage qui joint lesdites parties de jonction, l'outil étant **caractérisé par** :
- un revêtement en Ni qui présente une épaisseur entre 0,5 µm et 15 µm sur la surface de jonction de l'acier maraging ; et
- le joint de brasage qui est rempli du matériau de remplissage qui comprend au moins 70 % en poids de Cu.

10. Outil selon la revendication 9, dans lequel le joint de brasage présente une résistance au cisaillement d'au moins 200 MPa.

11. Outil selon l'une quelconque des revendications 9 et 10, dans lequel la partie de jonction en acier maraging présente une composition constituée par de 8 % à 25 % en poids de Ni, un ou plusieurs éléments d'alliage sélectionnés parmi Co, Mo, Ti, Al et Cr selon une quantité totale entre 7 % et 27 % en poids, moins de 0,03 % en poids de C, le complément étant constitué par du Fe et des impuretés.
